Europäisches Patentamt

**European Patent Office**

**Office européen des brevets**

(11) Numéro de publication: **0 020 841**
**A1**

## (12) DEMANDE DE BREVET EUROPEEN

(21) Numéro de dépôt: **79400586.8**

(22) Date de dépôt: **24.08.79**

(51) Int. Cl.³: **G 06 K 21/04,** G 06 K 19/06
// A61B5/00

(30) Priorité: **08.06.79 FR 7914668**

(43) Date de publication de la demande: **07.01.81**
**Bulletin 81/1**

(84) Etats contractants désignés: **AT BE CH DE GB IT LU NL SE**

(71) Demandeur: **Blanié, Paul, 282 rue Saint-Jacques, F-75005 Paris (FR)**

(72) Inventeur: **Blanié, Paul, 282 rue Saint-Jacques, F-75005 Paris (FR)**

(54) **Dispositif de mémoire et de traitement de données de diagnostic.**

(57)     Dispositifs pour la mise en mémoire et le traitement de données appartenant à au moins deux ensembles de données de base et au moins un troisième ensemble de données relatives aux relations pouvant exister entre lesdites données de base constitués par au moins une série de fiches de mêmes caractéristiques dimensionnelles et de même matrice d'adresses qu'au moins une fiche de références caractérisés par le fait que ladite matrice commune est ordonnée, les données de base d'au moins un premier ensemble correspondant aux différentes adresses, que les fiches d'au moins une série correspondent aux données de base d'au moins un second ensemble, chaque adresse de chaque fiche portant les signaux relationnels entre les données de base des ensembles correspondant à ladite adresse et à ladite fiche, ces signaux étant variables en fonction des données relationnelles du troisième ensemble. Application au diagnostic.

1

La présente invention a trait à des dispositifs de mise en mémoire et de traitement de données du type comprenant une collection de fiches de mêmes caractéristiques dimensionnelles et présentant une même matrice d'adresses, une première série de ces fiches correspondant chacune à au moins chaque élément d'au moins un premier ensemble de données de base, les adresses de la matrice correspondant chacune à au moins un élément d'au moins un second ensemble de données de base, au moins une fiche de références portant en clair la définition de la donnée correspondante ou une référence d'identification, chaque fiche de la première série portant en clair la définition des données correspondantes ou les références d'identification, un signal étant porté sur les fiches de la première série aux différentes adresses de la matrice, les données de base correspondant aux fiches et aux adresses considérées. Dans la collection de fiches, on peut prévoir selon l'invention au moins une seconde série de fiches correspondant chacune à au moins chaque élément d'au moins le second ensemble de données de base, les adresses de la matrice correspondant chacune à au moins un élément d'au moins un ensemble de données de base. L'une au moins des séries de fiches est transparente.

En particulier, les dispositifs conformes à l'invention trouvent une application remarquable dans le domaine du diagnostic et notamment du diagnostic médical. Aussi, à titre illustratif, dans ce qui suit, on se réfèrera essentiellement à ce type d'application étant bien entendu que l'Homme de l'Art saura employer lesdits dispositifs dans d'autres domaines sans sortir du cadre de la présente invention.

Le problème qui doit être résolu par ce type de dispositif appliqué au diagnostic médical est, après avoir observé des symptômes, de trouver à quelle maladie peut correspondre cet ensemble de symptômes. On remarquera à plusieurs reprises au cours de la présente description que fréquemment se présente le cas de maladies se développant simultanément ou successivement (maladies intercurrentes). Par ailleurs, dans ce qui suit et par simplification, on appellera symptômes tous les signes cliniques et paracliniques.

Dans l'art antérieur, on connait de nombreux dispositifs basés sur le même principe. Les plus traditionnels portent aux diverses adresses des signaux binaires, comme c'est le cas en particulier pour les cartes perforées, ce qui limite considérablement la capacité de mise en mémoire dès lors que les données relationnelles ne peuvent que correspondre à un bit par adresse et que si l'on veut dépasser deux informations, il faut occuper plusieurs adresses.

2

On a proposé, dans l'art antérieur, des systèmes dans lesquels la fiche de référence porte, dans chaque carreau d'un quadrillage, une maladie qui apparaît en tout ou partie dans les ouvertures pratiquées dans les fiches correspondant à des symptômes. Ces ouvertures dégagent totalement le carreau dans lequel est inscrit la maladie en cas de certitude, mais elles seront d'autant plus étroites que la maladie sera moins probable pour le symptôme considéré. L'absence d'ouverture traduit évidemment une probabilité nulle. Ce type de dispositifs présente l'inconvénient que, fréquemment et notamment lorsque deux affections atteignent le même malade (plus particulièrement en cas de maladies intercurrentes), la superposition des fiches de symptômes cache totalement la fiche de référence ce qui devrait théoriquement correspondre à la parfaite santé. Cette obturation apparaît lorsque l'un des symptômes ne correspond pas à une maladie et un autre symptôme à l'autre maladie.

Par ailleurs, et surtout si un même symptôme correspond à de nombreuses maladies, comme c'est le cas de la fièvre, la fiche présente plus d'ouvertures que de pleins et est d'une fragilité incompatible avec un usage fréquent. Enfin, s'ils permettent une pondération de la probabilité de la maladie, c'est-à-dire qu'ils ajoutent une dimension à la mémoire des données de l'un des ensembles, ils ne le permettent pas pour le second ensemble.

Dans le cas du diagnostic, non seulement une maladie est plus ou moins probable si l'on constate une fièvre, mais il importe de qualifier cette dernière : forte, faible, plus élevée le soir que le matin, ou, ce qui est important, le contraire : continue, discrète, etc. Et les dispositifs connus dans l'art antérieur ne pourraient le permettre qu'en multipliant les fiches et/ou les adresses de la matrice ce qui, dans les deux cas, complique la manipulation. Or, il est évident que si l'on veut donner à l'utilisateur des moyens simples d'accès direct à une mémoire de bonne capacité sans recourir à des machines coûteuses, les dispositifs de l'art antérieur sont soit longs à manipuler, soit trop approximatifs, ou même inexacts dans leurs conclusions.

Tous les praticiens ne peuvent passer une demi-heure à manipuler des fiches pour chaque patient, ou à l'inverse, conclure à la possibilité de vingt maladies au vu des symptômes observés et existant dans le dispositif. Ils ne peuvent être dans l'incapacité de traiter les données en cas de maladies intercurrentes.

Le demandeur des présentes a décrit, dans le brevet français n°2.254.061 déposé le 11 décembre 1973 et ses additions, intitulé "Dispositifs pour la

détermination des caractéristiques communes à des ensembles de données", des dispositifs dans lesquels des fiches transparentes correspondant chacune à au moins un élément d'un ensemble portent des signaux traduisant les données relationnelles entre les éléments dudit ensemble. Chaque adresse de la matrice correspond à un élément dudit ensemble de sorte que, sur une fiche correspondant à un élément, on trouve aux adresses des autres le signal relationnel et réciproquement. Le recours aux transparences permet les superpositions sans obturations et le système proposé permet une grande capacité d'adresses et à chaque adresse une variété suffisante de signes et de couleurs pour permettre dans certains domaines d'application un usage dans des conditions et avec les résultats optimaux sur lesquels l'utilisateur peut compter. Ce type de fiches a notamment trouvé son application dans la recherche des interactions (données relationnelles) entre médicaments (éléments de l'ensemble).

Selon la présente invention, les dispositifs comprennent au moins une fiche de références sur laquelle sont portées en clair, en abrégé, en code, en référence ou par tout autre moyen d'identification, les affections et/ou les symptômes, chacun d'eux étant porté en mémoire à une adresse. Une première série de fiches correspondant chacune à au moins un symptôme et/ou une maladie porte des signaux qui feront l'objet de la description ci-dessous. Une seconde série de fiches correspondant chacune à une ou plusieurs caractéristiques de l'intéressé porte des signaux que l'on décrira également ci-dessous : il est évident en effet que la tranche d'âge, le sexe, les états ou les étapes physiopathologiques, des particularités telles que l'absence d'un organe, ou d'un sens, une affection permanente ou chronique, le groupe ethnique, le séjour dans certaines régions du globe, peuvent favoriser certaines maladies. A l'inverse, l'absence de certains symptômes ou de certaines particularités propres au patient peuvent entraîner l'impossibilité totale de certaines maladies : l'observation d'un symptôme correspond en effet à la possibilité d'une ou plusieurs affections, son absence n'interdisant pas l'existence d'autres affections, par contre l'absence de ce même symptôme peut éliminer toute possibilité d'une troisième série d'affections. Ces diverses notions allant de la certitude positive à la certitude négative peuvent se traduire par des signaux portés sur les fiches des deux séries ou sur des fiches de séries particulières ajoutées aux précédentes. Les signaux conformes à la présente invention présentent la particularité de permettre la pondération des éléments de chacun des ensembles de données y compris ceux de l'ensemble des données relationnelles.

Dans ce qui suit, on se limitera à la description des fiches sans préci-

4

sions dimensionnelles, étant entendu que l'on peut faire appel à tout dispositif visionneur et en particulier d'agrandissement optique si l'on a recours à des microfiches.

Pour mieux faire comprendre les caractéristiques techniques et les avantages de la présente invention, on va en décrire des exemples de réalisation étant entendu que ceux-ci ne sont pas limitatifs quant à leur mode de mise en oeuvre et aux applications qu'on peut en faire.

On se référera aux figures schématiques suivantes :

La figure 1 représente une partie de matrice présentant divers types de signaux selon un exemple de réalisation.

Les figures 2 représentent un exemple de réalisation et des exemples de superposition.

Les figures 3, 4, 5, 6, 7, 8 et 9 représentent d'autres exemples de réalisation.

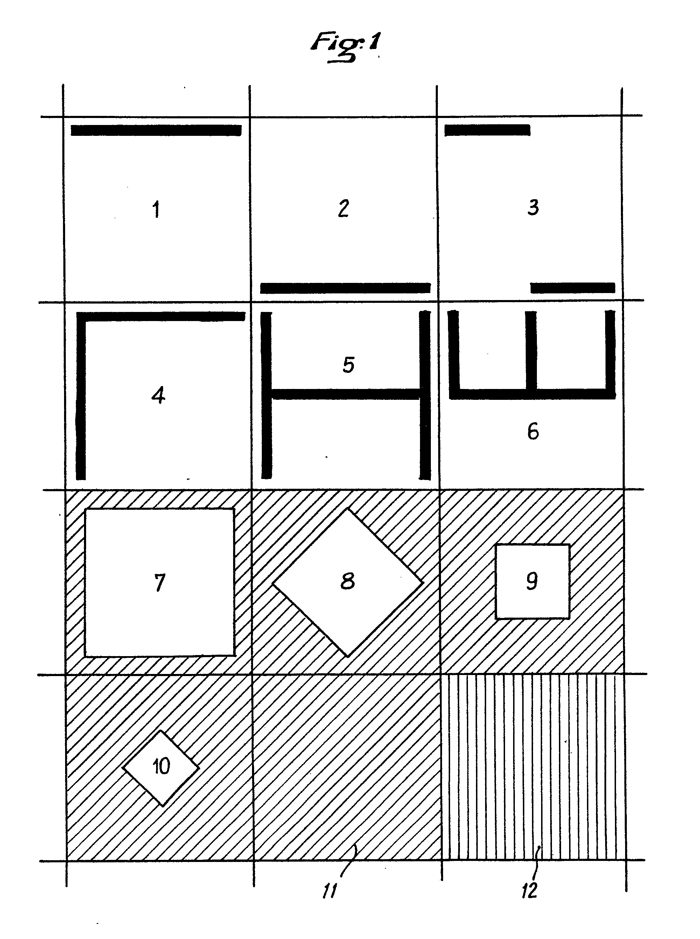

A la figure 1, on a représenté schématiquement douze carreaux d'une matrice sur lesquels ont été portés divers signaux relationnels. Une première série de signaux correspond à la pondération de l'élément du premier ensemble de données correspondant à la fiche elle-même, la seconde série de signaux correspondant à la pondération des éléments de l'autre ensemble de données correspondant à chaque adresse. Ces différents types de signaux ont été représentés séparément, mais on peut bien entendu combiner ceux des deux séries pour pondérer à la fois les éléments des deux ensembles, ici le symptôme correspondant à la fiche de l'affection correspondant à chaque adresse. En jouant sur les couleurs, on peut d'ailleurs augmenter les variantes possibles et par exemple pour la première série relative au symptôme on peut porter deux catérogies de symptômes sur la même carte avec des signes de deux couleurs différentes, ce qui peut permettre de réduire le nombre de fiches.

De même, comme on le verra plus loin, on peut utiliser par exemple deux couleurs en ce qui concerne les affections. La superposition de couleurs peut d'ailleurs donner des indications précieuses par la grande variété de combinaisons qu'elle permet.

En 1 à 6, on a représenté des signaux pouvant caractériser plus finement le symptôme. S'il s'agit par exemple de la fièvre, 1 pourrait correspondre à une fièvre élevée, 2 à une fièvre légère, 3 à une fièvre plus forte le matin que le soir, 4 à une poussée le matin, continue ensuite. L'homme de l'art peut ainsi créer des variantes de signes linéaires qui peuvent être rectilignes ou courbes et prennent le sens d'idéogrammes. On peut avoir comme en 1 à 4 des signes situés sur le pourtour du carreau de la matrice ou comme en 5 à 6 des signes sécants qui peuvent par exemple correspondre à une négation, par exemple 5 à l'absence de variations brutales, 6 à l'absence de poussées périodiques. Ces différents signes linéaires peuvent être soit en noir, ou en opacité totale, soit colorés par exemple en bleu ce qui se traduira par superposition à d'autres couleurs par des combinaisons. Si par exemple, sur la même fiche de symptômes, on peut noter des douleurs à droite ou à gauche, on pourra utiliser des signes bleus pour la droite, et jaunes pour la gauche, le vert correspondant à la symétrie. De plus, en recourant à certains graphismes par exemple à des triangles, on peut indiquer selon leur orientation des variantes possibles.

En 7 à 12, on présente des signaux constitués essentiellement par des surfaces plus ou moins étendues ou des couleurs diverses allant jusqu'au noir par effets soustractifs ou des translucidités pouvant aller de la transparence à l'opaque. Dans le présent exemple, ces signaux servent à caractériser la probabilité de l'affection ou au contraire son impossibilité. La grandeur de la réserve non colorée de 7 à 10 illustre la probabilité de la maladie, l'absence de réserve colorée en 11 traduisant une probabilité nulle. La partie hachurée sur la figure pourra être colorée par exemple en vert ou en jauen, le carré 12 par exemple en rouge signifiant que le symptôme observé est incompatible avec l'affection portée à l'adresse correspondante.

La superposition sur un même carré de signaux tels que l'un de ceux indiqués par 1 à 6 avec un des signaux 7 à 12, précise à la fois la forme du symptôme (aigü ou faible, continu ou discret, fréquent ou rare, etc.) et la probabilité correspondante de l'affection envisagée. Ceci permet, comme on le verra ci-dessous, de lever les doutes souvent trop nombreux que laissent les systèmes de l'art antérieur. Les signaux peuvent être portés sur les fiches par impression, par découpage, par transfert, par collage, soudure, ou autres fixations, par superposition de plusieurs supports qui peuvent même être en partie opaque.

Il est également évident que la matrice à carrés représentée à la figure 1 peut être de forme différente. Par exemple, sur la fiche de référence, on peut porter en clair les uns à la suite des autres, les noms des maladies. Chaque case correspondante devient alors un rectangle allongé et la matrice irrégu-

6

lière avec des adresses correspondant même éventuellement à des places de dimensions variables selon la longueur du nom. On peut alors remplacer les signaux notamment ceux désignés par 7 à 11 (figure 1) par des hachures éventuellement colorées et dont la largeur ou la fréquence indique par une densité d'ensemble la probabilité de l'affection. De même, on peut modifier les autres signaux compte tenu d'une disposition différente et recourir par exemple à des séries de signes répétés comme des pointillés ou des traits mixtes ou à des triangles, cercles ou autres.

On a généralement intérêt à regrouper les maladies appartenant à une même famille dans une même zône de la matrice (troubles digestifs, circulatoires, nerveux, etc.) car cela fait ressortir à l'utilisateur les domaines vers lesquels il peut être utile de poursuivre ses investigations et d'en écarter d'autres.

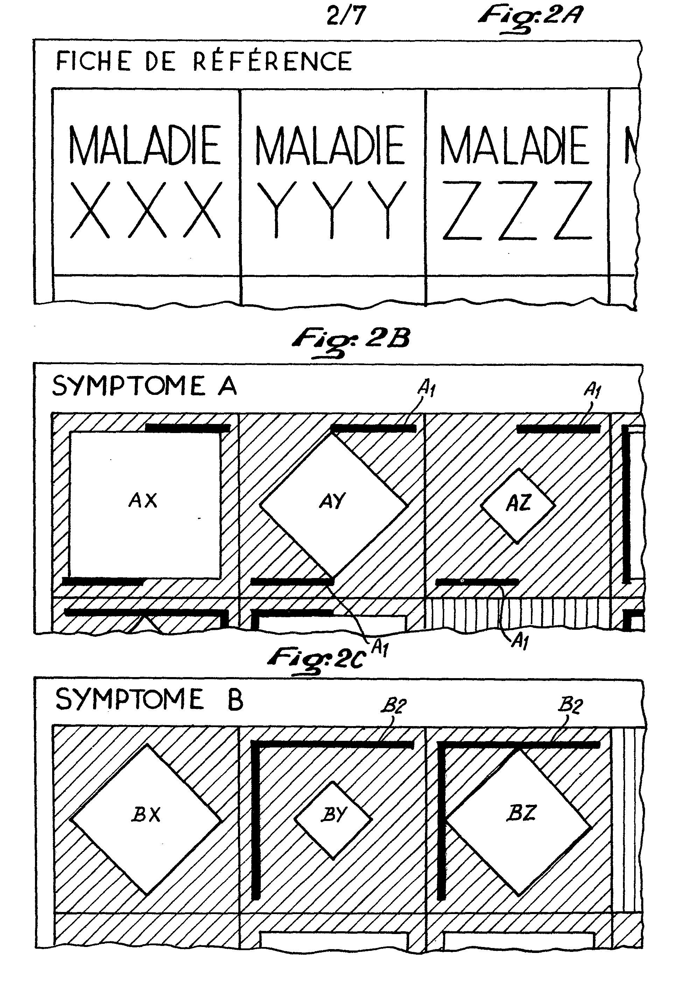

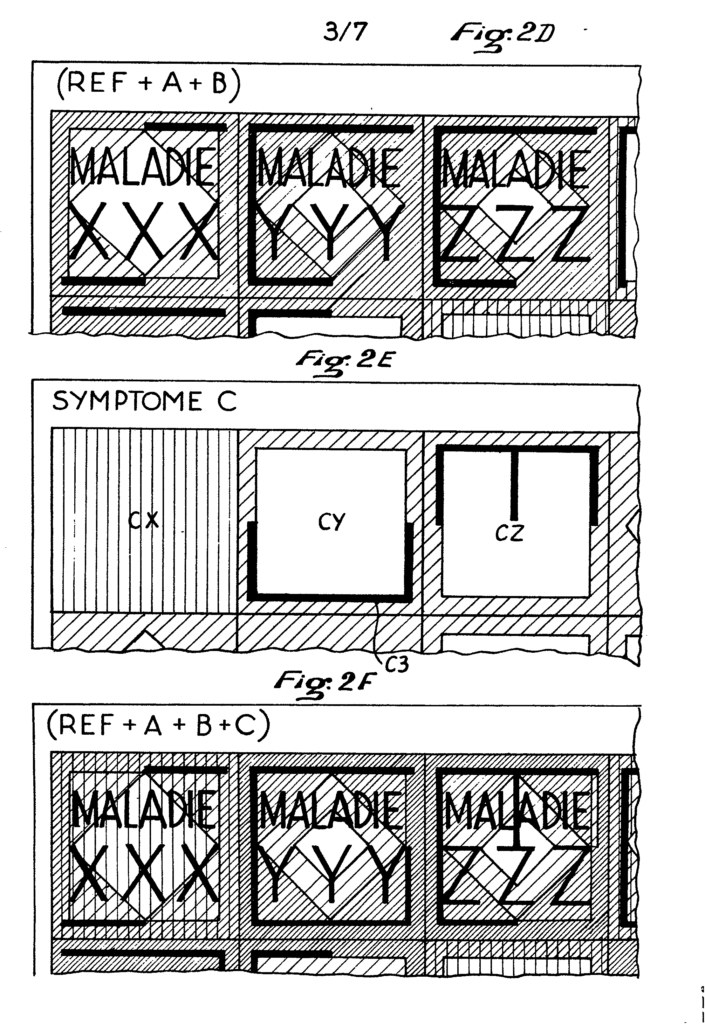

Aux figures 2, on a représenté schématiquement et partiellement la superposition de plusieurs fiches de symptôme et de la fiche de référence (figure 2A). On s'est bien entendu limité ici volontairement à un nombre très restreint de symptômes et de maladies pour alléger les commentaires.

En se reportant à ces figures 2, on désigne par AX l'ensemble des signaux portés sur la fiche du symptôme A à l'adresse de la maladie X. De même, pour les symptômes B et C et les maladies Y et Z. Si l'on s'en tient à la superposition des fiches A et B, la maladie X correspond à la case la plus claire, Y et Z venant ex aequo derrière (figure 2D = figure 2A + 2B + 2C). X est donc la plus probable au vu des seuls symptômes A et B, Y et Z l'étant moins mais leurs probabilités étant égales. Par ailleurs, les signaux de caractérisation ou des symptômes (A1 ou B2) ne les différencient pas. Dès que l'on ajoute la fiche du symptôme C, le signal CX d'incompatibilité par exemple rouge, écarte la maladie X qui ne peut se présenter si l'on observe le symptôme C. Il faut donc essayer de choisir entre Y et Z aussi probables l'un que l'autre.

A la figure 2E, le symptôme C est caractérisé par les signaux C3 et C4 respectivement en CY et CZ. C3 signifie par exemple fièvre modérée avec quelques poussées, C4 fièvre généralement forte mais très irrégulière (figure 2F = figure 2B + C + E = figure 2D + E). Ce qui est observé chez le patient permet alors de distinguer et de choisir.

Il est évident que si l'on recourt à des couleurs assez variées, cela permet lors des superpositions des lectures assez rapides notamment en utilisant

7

des couleurs différentes par groupes de symptômes ou de maladies.

On remarquera qu'en dépit des superpositions, le nom des maladies reste
lisible.

La présentation des figures des demandes de brevet rendent impossibles
l'utilisation de couleurs, leur remplacement par de simples hachures rendent
plus difficile cette lecture et la vision directe des cases plus ou moins
claires. Mais l'utilisation de fiches transparentes permet, en plus de cette
lecture, de détecter les cas d'affections simultanées ou autres cas où la
superposition des fiches de symptômes finit par couvrir entièrement de couleur la totalité de la surface ce qui est le cas : si par exemple, le signe
AZ (figure 2B) avait été totalement couvert (probabilité nulle) de même que
le signe BY (figure 2C), cela aurait pu signifier (figure 2D) que la maladie X
était probable, Y et Z ne l'étant plus. En fait, comme la fiche C (figure 2E)
l'a montré, X était impossible, mais AZ et BY correspondant à une probabilité
nulle, c'est vraisemblablement que selon AZ et CY, le patient souffre de la
maladie Y et que selon BZ et CZ, il souffre également de Z, ce qui n'est pas
possible de déceler avec les systèmes à fiches opaques connus.

En revenant à la figure 2F, on remarquera que si les fiches A, B et C
(figures 2B, 2C et 2E) sont colorées en vert pour les signes "probable ou probabilité nulle" et en rouge pour le signe "impossibilité ou incompatibilité",
cela se traduit par superposition des fiches par une soustraction de lumière
donnant du moins en partie, une tâche très foncée sinon noire sur le nom de la
maladie. Comme on l'a mentionné plus haut, on peut utiliser non plus une matrice rectangulaire à quadrillage d'adresses occupant chacune un carré, mais
une matrice répartie selon une disposition où le nom de la maladie est écrit
dans sa longueur. On peut même aller jusqu'à répartir l'espace au hasard de
la longueur des mots, la dénomination matrice perdant alors son sens mathématique et cartésien.

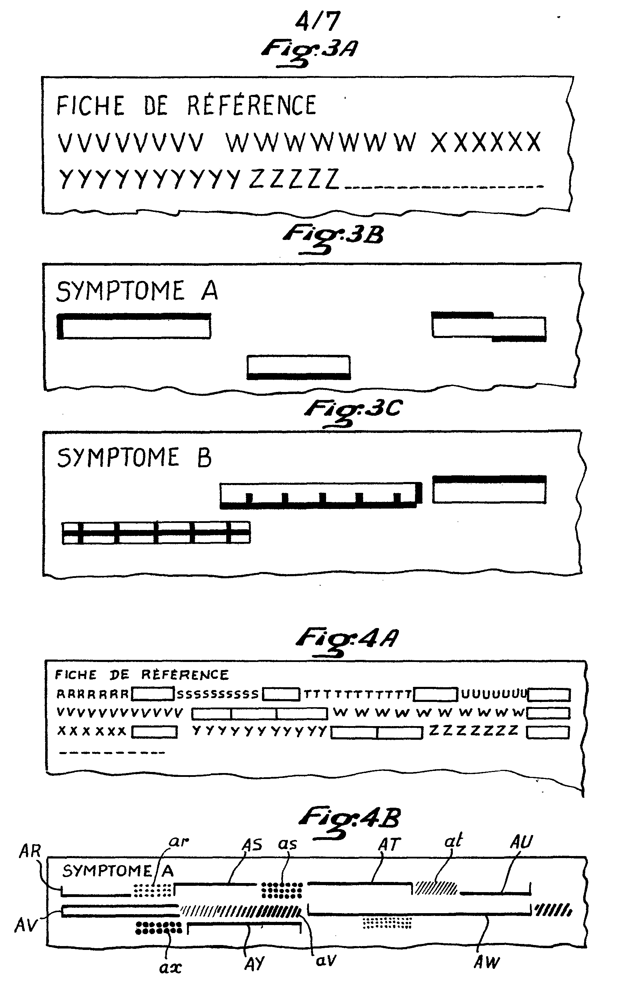

On obtient alors une fiche de référence telle celle des figures 3, les
fiches de symptômes pouvant être inspirées du système décrit aux figures précédentes. On peut remplacer notamment la représentation des probabilités par
des teintes plus ou moins claires ou des hachures plus ou moins larges ou
denses. On peut également par simplification envisager la fiche entièrement
colorée avec des réserves encadrant les adresses retenues, les autres signaux
étant ajoutés. Cela peut se faire en pratiquant des ouvertures dans au moins
une feuille colorée quitte à les assembler avec une fiche transparente pour

8

améliorer la solidité de l'ensemble et en diminuer la fragilité. On peut ajouter les autres signaux comme il a été dit plus haut soit directement sur la
fiche ou la feuille, soit sur une autre fiche ou feuille également assemblée.
Ici encore, on peut jouer sur la soustraction de la lumière par superpositions
en utilisant par exemple des couleurs différentes pour des familles différentes de maladies ou de symptômes. Cette disposition en clair des noms peut permettre une grande capacité si, au besoin, on utilise un dispositif grossissant
tel qu'une ou plusieurs lentilles de Fresnel ou une ou plusieurs loupes, lentilles ou loupes cylindriques ou de révolution, pour faciliter la lecture des
lignes et contrôler la bonne coïncidence des fiches superposées.

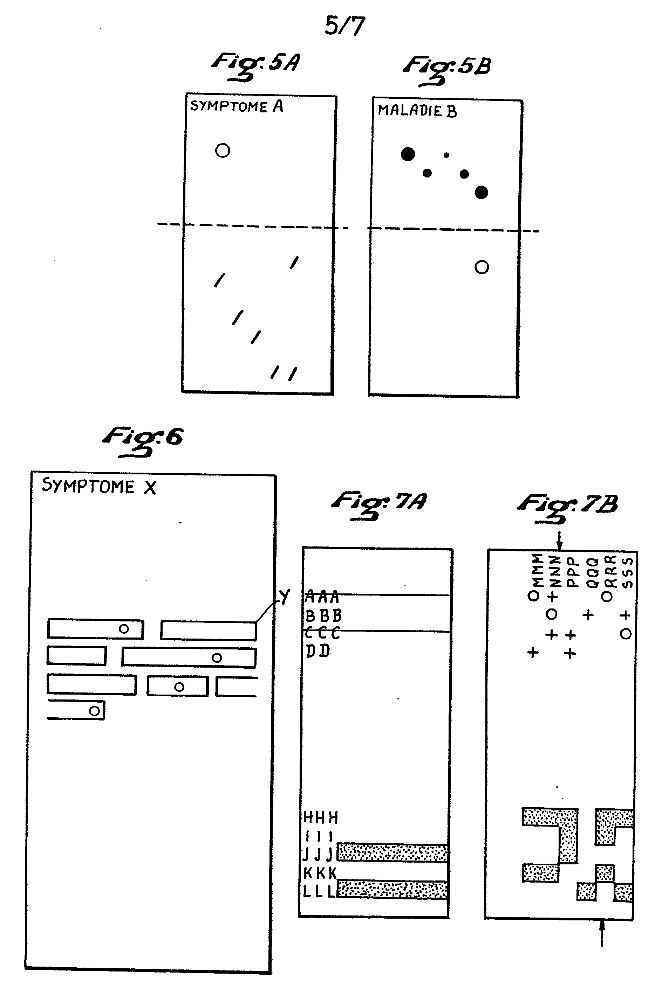

Mais il est évident que si pour augmenter la capacité des fiches sans augmenter leurs dimensions, on se trouve amené à réduire la grandeur des caractères ou autres lettres ou signes désignant les maladies, les superpositions
de signaux risquent, même avec des dispositifs grossissants, de rendre l'ensemble surchargé, illisible et même difficile à faire coïncider lors de la
superposition ce qui risquerait d'entraîner des erreurs. On peut donc prévoir
comme représenté aux figures 4, des espaces entre les maladies sur la fiche
de référence et bien entendu, sur la matrice au sens large du terme qui lui
a été donné plus haut et que l'on retrouvera sur toutes les autres fiches. On
peut alors sur chaque fiche de symptôme porter à côté de l'espace réservé à
la maladie, par exemple à sa droite, les signaux relationnels désirés qui
servent à pondérer aussi bien la probabilité de la maladie face au symptôme
considéré que les caractéristiques du symptôme dans le cas de la maladie
considérée. Si l'on prévoit plusieurs espaces consécutifs après une maladie,
on peut même noter les signaux correspondant à l'évolution dans les temps ou
dans l'espace : période de début, période d'état, période d'évolution (favorable ou défavorable), manifestation locale, régionale, disséminée ou généralisée, les symptômes se modifiant dans les temps avec les diverses périodes
ou avec l'extension du mal.

Si l'on se reporte à la figure 4A sur une telle fiche de référence sont
portés les noms des maladies ou leurs références codées qui pourraient se réduire à un numéro de renvoi à un tableau ou un registre. Chaque nom ou code
RRR..., SSS..., TTT..., etc. est suivi d'une ou plusieurs cases en fonction de
l'importance à accorder à cette évolution des symptômes au cours des diverses
périodes. Sur les fiches de symptômes, on va donc retrouver à l'emplacement
des maladies correspondant au symptôme considéré, des signaux tels que (AR à
AY) ceux représentés à la figure 4B et qui symbolisent et pondèrent la probabilité de l'affection ou la caractéristique du symptôme. A l'emplacement des

9

cases de la figure 4A, on va retrouver d'autres signaux correspondant inversement et respectivement à la caractéristique du symptôme ou à la probabilité de l'affection correspondante. Ces signaux peuvent être constitués (ar ou as) par des trames (au sens de l'imprimerie) ce qui convient par la notion de densité à illustrer un caractère plus ou moins fort ou une probabilité (mesure analogique au sens informatique du terme) par apparition aux signaux précédents (plus arithmétiques ou numériques). On remarquera que si l'on place les signaux du type ar, as, non plus à l'emplacement des cases mais à celui des noms ou sur l'ensemble de la surface, ces noms ou les références des maladies resteront plus ou moins visibles selon la mesure exprimée et par exemple selon la probabilité. Cette solution à trame pointillée ou hachurée permet de se limiter à une seule couleur ce qui réduit les frais ou permet d'utiliser les couleurs pour d'autres indications comme on le verra plus loin.

Dans certains cas et notamment lorsqu'un symptôme présente de très nombreuses caractéristiques possibles, on peut utiliser un simple nombre renvoyant à une table, à des fiches, ou à un dictionnaire comme c'est le cas de la fièvre dont les formes et les variations dans le temps et en amplitude sont extrêmement variées et souvent significatives sur le plan de la nosologie.

Les figures 5 A et B représentent schématiquement un autre exemple de réalisation de fiches conformes à l'invention. Selon cette version, sur la matrice commune, sont portées dans deux zônes distinctes les maladies et les symptômes une zône intermédiaire éventuelle correspondant aux manifestations idiopathiques à la limite entre les symptômes et les affections proprement dites, c'est-à-dire dans tous les cas ou selon les connaissances actuelles on ne distingue pas nécessairement les effets et les causes (aménorrhée, épistaxis, hypoglycémie idiopathique, etc.).

Sur les figure 5, les fiches comprennent en partie haute, les adresses des maladies, en partie basse celles des symptômes. Une première sous-série de fiches telles que celle de la figure 5A donne pour un symptôme correspondant à la fiche les diverses maladies possibles. On peut donc agir avec les fiches 5A comme on a indiqué plus haut, mais les fiches 5B permettent un recoupement de contrôle qui permet notamment d'apprécier le nombre de symptômes observés par rapport au nombre de symptômes habituellement rencontrés.

L'utilisation d'un signal circulaire à l'adresse de la donnée correspondant à la fiche rend plus claire l'observation des signes qui peuvent venir .s'y inscrire ; on peut (figure 5 A) se contenter d'un diamètre ce qui donne l'information minimale, en faire varier l'inclinaison ce qui augmente la capacité d'information, ou recourir à des signaux couvrant plus ou moins la surface du cercle lors de la superposition des fiches, ce qui (figure 5B) constitue également un mode de pondération.

A la figure 6, on a représenté une autre variante selon laquelle chaque
adresse de maladie est associée à plusieurs adresses de symptômes, chaque
fiche correspondant à un symptôme. Aussi bien dans ce cas que dans celui des
figures 5, et précédentes, on peut prévoir des fiches correspondant à des
conditions particulières propres à l'intéressé (nature et conditions de vie
et de travail, âge, sexe, état physiologique tel que grossesse, existence
d'affections permanentes telles que le diabète ou d'un état passager périodique, etc.).

Sur le cas représenté à la figure 6, chaque maladie et ses symptômes
est représentée par un cadre. On peut ainsi dans un cadre principal adresser
une maladie et ses principaux symptômes et à la suite ou au voisinage prévoir
des cadres auxiliaires pour les formes les plus particulières de cette maladie
et pour les symptômes propres à chacune de ces formes en sus de ceux de la
maladie principale. Lors de la superposition des fiches correspondant aux divers symptômes observés, on voit apparaître dans les divers cadres les signaux
relationnels et l'on peut apprécier le rapport entre le nombre de symptômes
observés et ceux retenus en mémoire sur la matrice ce qui donne une appréciation directe de la probabilité.

Les figures 7 représentent schématiquement une nouvelle variante dans laquelle l'utilisateur va noter lui-même sur une fiche de référence les données
qu'il a retenues et en particulier, les symptômes observés. Si les maladies
sont regroupées de façon à limiter le nombre de fiches transparentes, on peut
par exemple sur une vingtaine de fiches regrouper plusieurs centaines de maladies dont chacune occupe une zône définie de la fiche, c'est-à-dire un groupe
d'adresses. La matrice peut être ainsi divisée par exemple en carrés, en rectangles, en lignes ou en colonnes.

A la figure 7A, on a représenté schématiquement une fiche de références
sur laquelle les symptômes sont indiqués en clair ou en code sur la gauche,
l'utilisateur cochant d'un trait les symptômes observés. Ce cochage peut être
manuel ou effectué par collage, décollage, coulisse de tirettes, rotation de
tiges ou de plaquettes, ce qui fait apparaître une ligne plus ou moins large
blanche, colorée ou noire. Cette fiche de références est donc caractéristique

II

du sujet examiné. On peut ainsi comme il a été dit ci-dessus, noter parmi les "symptômes" les caractéristiques personnelles et les conditions de vie dudit sujet. Lorsqu'on présente en superposition les diverses fiches transparentes de maladies portant sur les signaux relationnels, on va relever les coïncidences.

A la figure 7B, on a représenté une fiche où les maladies sont réparties en colonnes. Les signaux relationnels peuvent être par exemple un 0 en cas d'incompatibilité entre le symptôme et la maladie, et un signe + (s'inscrivant dans les 0 qui pourraient s'y superposer) en cas de correspondance entre symptôme et maladie, une absence de signal correspondant à l'indépendance ou à la non relation entre symptômes et maladies. On peut également comme c'est indiqué sur la partie basse des figures 7 colorer ou noircir toutes les adresses ne correspondant pas à un signe +. De la sorte, la ligne verticale interrompue se trouve rendue continue par les recoupements avec les lignes horizontales des symptômes. En jouant sur les couleurs on peut traduire les divers signaux. Les coïncidences ont été noter par les fiches (maladies NNN en haut, RRR en bas).

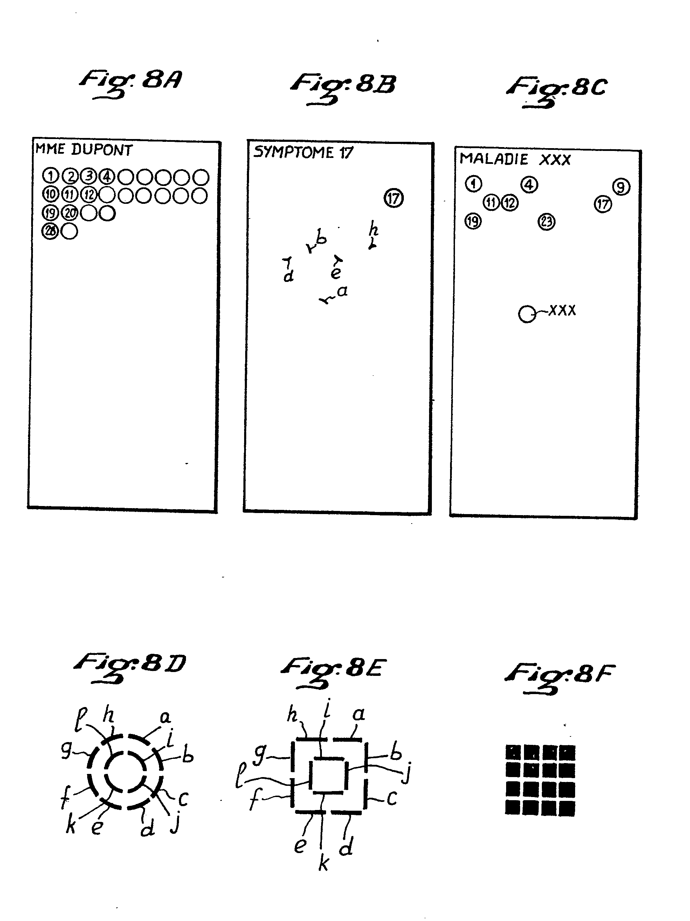

Aux figures 8, sont représentées schématiquement une autre variante de réalisation de fiches conformes à la présente invention. La répartition des adresses de la matrice peut être du même type qu'aux figures 5, les symptômes occupant la partie haute, les maladies la partie basse.

L'utilisateur va, comme à l'exemple précédent, préparer une fiche propre au sujet en cochant ou cerclant les symptômes (au sens large du terme tel qu'il a été défini plus haut). Chaque adresse de symptôme peut par exemple être matérialisée par un cercle portant par exemple un numéro ou une abréviation que l'on identifie sur un répertoire.

Une fois la fiche ainsi remplie, on lui superpose les fiches transparentes de symptômes telles que la fiche 17 sur 8B. On y retrouve à l'adresse 17 le cercle du symptôme et aux adresses des maladies des signes a, b, d, e, h. Comme le montre la figure 8D, à l'adresse d'une maladie est prévu un grand cercle auquel peut être ajouté au moins un cercle plus petit concentrique. Il s'agit ici uniquement d'un problème de lisibilité à l'oeil nu ou avec grossissement (loupe, projecteur, etc.). Si pour une maladie, on a par exemple sélectionné 8 symptômes caractéristiques, ils seront matérialisés par 8 arcs de cercles a, b, c, d, e, f, g, h, que l'on retrouvera sur chacune des fiches de symptômes correspondantes (figure 8B). Si donc on superpose les 8 fiches de symptômes adéquats, le cercle correspondant à la maladie sera complet.

Si pour une maladie, il faut plus de symptômes que ne le permet la lisibilité on peut prévoir des cercles concentriques ou plusieurs adresses groupées comme à la figure 6. Comme à cette même figure 6, on peut d'ailleurs regrouper la maladie principale avec ses symptômes généraux et les formes diverses avec leurs symptômes particuliers. On peut recourir à des cadres ou analogues pour mieux définir les adresses ainsi groupées sans avoir systématiquement à se reporter à une fiche de référence de maladies ou à un répertoire.

A la figure 8D, on a recouru à des cercles concentriques divisés en arcs de a à h et de i à l, mais il est évident que l'on peut diviser ainsi tout tracé linéaire ou toute surface par exemple des carrés (figures 8E et 8F), des triangles, des spirales, etc. Pour des raisons de commodité, l'expérience a montré qu'il pouvait être utile et ceci est valable également dans nombre de exemples des figures précédentes, de disposer fiches ou signaux par ordre de probabilité ou d'apparition. Par exemple, dans le cas des figures 8A et 8B, les symptômes seront classés dans l'ordre 1 = fièvre, 2 = céphalée, etc. qui correspond aux probabilités décroissantes. De même (figures 8D et F) on disposera les signaux dans l'ordre général d'apparition chronologique, a étant le premier symptôme généralement observé, b le second et ainsi de suite de sorte que dans le temps le cercle (figure 8D) ou le carré (figures 8E et F) se formera progressivement (au moins statistiquement parlant). On peut par exemple utiliser un certain nombre de cercles concentriques et les décomposer en arcs sensiblement de même longueur. Pour fixer les idées, on pourrait prendre trois cercles, le plus petit divisé en 9 arcs, le médian en 12, le grand en 15, soit 36 arcs. On peut alors répartir les symptômes correspondant aux arcs en réservant les plus fréquents au cercle central, les moins fréquents à l'extérieur et en les disposant dans l'ordre d'apparition, par exemple dans le sens des aiguilles d'une montre à partir du haut. On peut ainsi jouer en coordonnées polaires, les rayons vecteurs correspondant à la diminution de la fréquence, l'argument au temps. On pourrait également utiliser de même des coordonnées d'un autre type notamment cartésiennes.

A la figure 8C, on a représenté une fiche de maladie. on y retrouve en partie basse le signal de la maladie tel qu'il doit être reconstitué par superposition des fiches (figure 8B). Il s'agit ici du cercle correspondant à la maladie XXX. En partie haute de cette fiche XXX, on retrouve les symptômes correspondants. Ici sont représentés 8 symptômes. Sur chacune des fiches de ces symptômes (comme à la figure 8B), on doit retrouver un arc (tel que a) du cercle complet (XXX figure 8C).

13

Lorsqu'on a superposé à la fiche de la figure 8A, les fiches de symptômes de la figure 8B correspondant à ceux notés par l'utilisateur sur la fiche de la figure 8A, apparaîtra un signal complet à l'adresse de la maladie correspondante. Comme dans le cas précédent, il peut en apparaître plusieurs (maladies intercurrentes) ou aucun (maladie non encore complètement caractérisée). Dans ce dernier cas, le signal le plus complet correspond à la maladie la plus probable, ce qui peut nécessiter des examens plus approfondis. On peut à cet effet grouper les adresses des symptômes (cliniques d'abord, paracliniques ensuite) ce qui permet de remplir dans un ordre logique les adresses de la fiche de base (figure 8A). Ce système permet notamment à l'utilisateur de consulter la fiche de la maladie supposée par les seuls symptômes cliniques pour voir ce qui serait nécessaire de faire sur le plan paraclinique pour confirmer ou infirmer ce prédiagnostic. On ne tient pas compte ici pour simplifier l'exposé des cas mentionnés ci-dessus où il peut être nécessaire de recourir à plusieurs adresses pour une même maladie à symptômes trop nombreux pour être lisibles à une seule adresse. Il peut être utile de partir sur les fiches de maladie du type de la figure 8C non seulement le signal propre XXX mais les signaux qui apparaissent lors de la super position des fiches de symptômes. Cela permet notamment, par recoupement et contrepreuve, de vérifier si toutes les fiches de symptômes correspondantes et elles seules on été superposées ou s'il n'y a pas trace d'une possibilité autre, notamment d'une maladie intercurrente non complètement déclarée. Si une maladie intercurrente est totalement caractérisée par ses symptômes, la superposition des fiches de symptôme a fait nécessairement apparaître au moins deux signaux (ici des cercles) complets aux adresses des deux maladies (ou plus). Si donc on superpose les fiches (figure 8C) des maladies détectées, on retrouvera la coïncidence avec tous les signaux apparus par superposition des fiches de symptômes (figure 8B).

Il peut donc être important sur la fiche où l'utilisateur a noté les symptômes relevés, que soient indiqués à la fois le nom, la référence ou le code des maladies aux adresses correspondantes et le tracé de l'ensemble des signaux de symptômes qui devraient apparaître lors de la superposition. On peut par exemple coder ou inscrire la maladie en noir et faire apparaître l'ensemble des signaux en bleu sur la fiche de référence, et faire apparaître en rouge sur les fiches transparentes de symptômes les signaux portés aux adresses de la maladie. De la sorte, par superposition, on verra en noir par transparence le nom, la référence ou le code de la maladie et au fur et à mesure des superpositions, les signaux partiels se plaçant sur le signal complet bleu, celui-ci deviendra progressivement violet. Quand il le sera totalement, cela signifiera donc que l'ensemble de symptômes sera réuni.

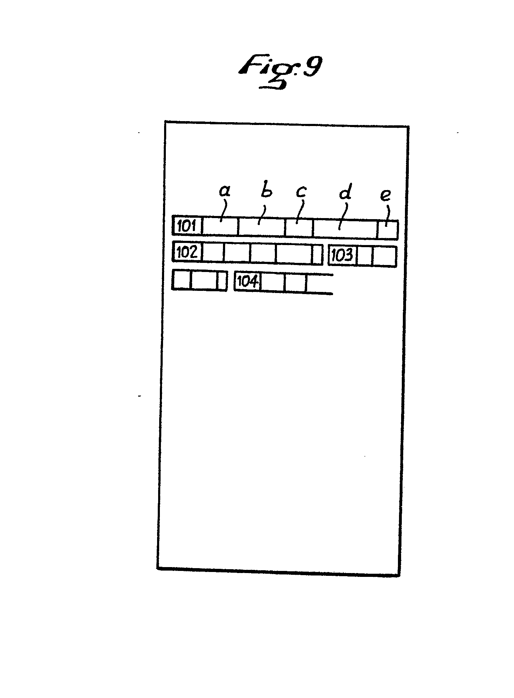

Aux figures 9, est représenté schématiquement un exemple de réalisation conforme à l'invention. Comme on l'a vu précédemment, la présente réalisation comprend une fiche portant la matrice de références. Sur cette fiche sont portés (figure 9A) à la suite les unes des autres les références abréviations ou analogies des maladies, suivies de cases formant pour chaque maladie un ruban d'adresses. On peut après chaque maladie diviser le ruban correspondant en zônes pouvant être colorées et/ou tramées et comportant chacune un certain nombre d'adresses. Par exemple, après la référence de maladie (101 à la figure 9A) dans un rectangle blanc ou incolore suivent cinq rectangles formant la suite du ruban "101" qui pourrait avoir les significations suivantes :

1/ en jaune, les adresses des symptômes constants de la maladie 101 (fréquence 100 %), référence a ;

2/ en blanc ou incolore, celles des adresses des symptômes fréquents (de 50 % à 99 %), référence b ;

3/ en vert, celles des adresses des symptômes courants (de 5 % à 49 %), référence c ;

4/ en bleu, celles des adresses des symptômes rares (1 % à 5 %), référence d ;

5/ en rouge, celles des adresses des symptômes incompatibles avec la maladie 101 (fréquence 0 %), référence e.

Dans ce qui précède, les fréquences constatées statistiquement ont été arrondies pour toutes les valeurs intermédiaires entre 0 % et 100 %. Sur la fiche de la figure 9A, sont donc alignés en allant à la ligne chaque fois que cela est nécessaire maladies et adresses des symptômes correspondants. Dans chacune des zônes, on peut adresser les symptômes selon un ordre choisi comme il a été dit précédemment, c'est-à-dire par ordre de fréquence ou par ordre habituel d'apparition, notamment dans le cas des maladies à caractéristiques particulièrement évolutives.

Sur chaque fiche transparente de symptôme que l'on viendra superposer à la fiche de la figure 9A, seront portés des signaux de correspondance symptôme-maladie. De la sorte il ne se produit pas de superposition de signaux de fiches de symptômes. Avec 300 à 400 maladies, on peut constater que 6.000 à 8.000 adresses de symptômes peuvent convenir. Une fiche à 10.000 adresses présente alors une capacité largement suffisante. Si chaque adresse couvre Nmm2, la matrice couvrira Ndm2 ce qui donne une idée précise de l'encombrement utile.

Enfin, il peut utile d'introduire des données plus nombreuses ou/et plus précises concernant les symptômes du malade susceptibles de figurer sur les fiches transparentes sous une forme différenciée à partir d'un idéogramme de base, par exemple de barres verticales.

A titre d'exemple non limitatif, on peut faire figurer sur une de ces barres verticales la chronologie d'apparition du symptôme au cours de chaque maladie, lorsque cette chronologie est importante, en plaçant par exemple des traits horizontaux sur la barre verticale : si le trait horizontal est en haut de la barre verticale, le symptôme a une apparition en début de maladie ; s'il est au centre de la barre verticale, le symptôme a une apparition au milieu de la maladie ; s'il est au bas de la barre verticale, le symptôme apparaît dans la phase terminale de la maladie.

De même l'importance relative du symptôme dans la maladie par rapport aux autres symptômes est indépendante de la fréquence ou de l'apparition chronologique et peut être figurée par exemple par un ou plusieurs points ou cercles placés sur ou tangents à la barre verticale, ce qui se traduit de la manière suivante :

- pas de point ou de cercle = importance habituelle,
- un point ou un cercle = importance supérieure à la moyenne habituelle,
                     relativement aux autres symptômes,
- deux points ou deux cercles = très grande importance.

La comparaison de ces compléments à l'idéogramme de base peut se faire à volonté en fonction des signifiants désirés.

Lorsque l'on superpose ainsi les fiches correspondant aux symptômes observés à la fiche de la figure 9, on remarque rapidement les zônes les plus couvertes de signaux ce qui donne au premier regard une idée des maladies les plus probables. Des examens approfondis permettront, comme il a été dit précédemment, de lever les doutes qui pourraient subsister.

Dans tout ce qui précède, on a parlé de symptômes. Il est évident que pour

16

l'homme de l'art, dans l'utilisation des dispositifs conformes à la présente invention, on peut assimiler aux symptômes les résultats d'examens, analyses, tests ou équivalents. On indiquera par exemple lors de la pondération un résultat "hypo", "normal", ou "hyper".

On peut donc dire pour résumer que les dispositfs conformes à la présente invention permettent de mettre en mémoire au moins deux ensembles de données (symptômes et maladies) ce qui représente deux dimensions ainsi qu'au moins un ensemble de données relationnelles (correspondance ou non entre chaque symptôme et chaque maladie) pondérées de plus par rapport aux données de chacun des ensembles (caractéristiques du symptôme dans le cas de la maladie considérée, probabilité de la maladie au vu du symptôme considéré), ce qui se traduit donc par deux dimensions supplémentaires. De plus, le recours aux moyens décrits permet l'usage des dispositifs dans la détection simultanée de plusieurs maladies, à partir des symptômes observés c'est-à-dire que l'on peut dégager les données relationnelles entre un groupe de données de chacun des deux ensembles en distinguant à l'intérieur du groupe de données relationnelles celles qui correspondent aux données de chaque groupe des données de base des deux ensembles. On remarquera que l'on peut permuter les deux ensembles de base, les maladies correspondant aux fiches, les symptômes aux adresses.

Il est donc évident que, sans sortir du cadre de la présente invention, l'homme de l'art pourra utiliser pour d'autres applications les dispositifs conformes à la présente invention, et ceci sur la base de ce qui vient d'être exposé en termes plus généraux.

Par exemple, en de nombreux domaines techniques, la recherche des causes d'un incident ou d'une panne revient dans une première phase à en relever les effets symptômatiques et dans une seconde à déduire la ou les causes de l'anomalie, enfin dans une troisième phase d'y porter remède.

Ceci est vrai aussi bien pour un calculateur électronique que pour une automobile ou toute autre machine par exemple. On peut donc sans sortir du cadre de la présente invention remplacer dans la présente demande de brevet symptôme par effet et maladie par cause et généraliser à toute recherche de causes dès lors que l'on peut répertorier ces causes ainsi que leurs effets et la nature et/ou la pondération des relations entre causes et effets. L'homme de l'art peut donc aisément passer du diagnostic médical au diagnostic mécanique, électrique, électronique ou autre, sans sortir du cadre de l'invention par simple changement du domaine d'emploi, du vocabulaire et éventuellement des signaux utilisés. Ces dispositifs peuvent en particulier trouver
leur application dans le domaine de l'éducation, de la formation, du contrôle
ou du divertissement.

En ce qui concerne les symboles, signaux ou autres éléments idéographiques, on a vu qu'ils pouvaient présenter un caractère analogique (densité,
transparence, fréquence, étendue, etc.) ou un caractère arithmétique ou numérique (symboles distincts) du fait du caractère continu des variations des
uns et discret (ou discontinu) des variations des autres.

Pour distinguer ces diverses sortes de signaux, on peut soit les localiser en des places différentes de l'espace réservé à une adresse (figures 4),
soit les superposer mais en les distinguant (signaux linéaires et signaux
étendus en surface comme représentés notamment à la figure 1 et aux suivantes).
Mais l'on peut également recourir au jeu des couleurs et même aux synthèses
par soustraction ou éventuellement par addition, ce qui permet d'obtenir des
zônes plus ou moins sombres et même opaques ou au contraire des zônes claires
et même blanches. Par ailleurs, on peut tramer ou teinter légèrement les
adresses (rubans des figures 9 par exemple) des maladies ne présentant pas
le symptôme correspondant à la fiche d'où une meilleure distinction des cas
intercurrents.

18

## REVENDICATIONS

### REVENDICATION 1

Dispositifs pour la mise en mémoire et le traitement de données appartenant à au moins deux ensembles de données de base et au moins un troisième ensemble de données relatives aux relations pouvant exister entre lesdites données de base constitués par au moins une série de fiches de mêmes caractéristiques dimensionnelles et de même matrice d'adresses qu'au moins une fiche de références caractérisés par le fait que ladite matrice commune est ordonnée, les données de base d'au moins un premier ensemble correspondant aux différentes adresses, que les fiches d'au moins une série correspondant aux données de base d'au moins un second ensemble, chaque adresse de chaque fiche portant les signaux relationnels entre les données de base des ensembles correspondant à ladite adresse et à ladite fiche, ces signaux étant variables en fonction des données relationnelles du troisième ensemble.

### REVENDICATION 2 Dispositifs selon la revendication 1 caractérisés par le fait que les signaux sont variables en fonction des caractéristiques des données des premiers ensembles en relation avec les données des seconds ensembles.

### REVENDICATION 3 Dispositifs selon l'une des revendications 1 ou 2 caractérisés par le fait que les signaux sont variables en fonction des caractéristiques des données des seconds ensembles en relation avec les données des premiers ensembles.

### REVENDICATION 4 Dispositifs selon l'une des revendications 2 ou 3 caractérisés par le fait que les signaux sont pris dans deux séries, l'une variant comme il est dit à la revendication 2, l'autre comme il est dit à la revendication 3.

### REVENDICATION 5 Dispositifs selon la revendication 4 caractérisés par le fait que les signaux des deux séries sont juxtaposés.

### REVENDICATION 6 Dispositifs selon l'une des revendications 4 ou 5 caractérisés par le fait que les signaux des deux séries sont superposés.

REVENDICATION 7 Dispositifs selon l'une quelconque des revendications 2 à 6 caractérisés par le fait qu'au moins une série de signaux est à variations continues.

REVENDICATION 8 Dispositifs selon l'une quelconque des revendications 2 à 7 caractérisés par le fait qu'au moins une série de signaux est à variations discrètes.

REVENDICATION 9 Dispositifs selon l'une quelconque des revendications 1 à 8 caractérisés par le fait que les fiches d'au moins une série sont transparentes.

REVENDICATION 10 Dispositifs selon l'une quelconque des revendications 7 à 9 caractérisés par le fait que les signaux d'au moins une série sont étendus en surface.

REVENDICATION 11 Dispositifs selon la revendication 10 caractérisés par le fait que la surface des signaux est variable.

REVENDICATION 12 Dispositifs selon l'une quelconque des revendications 10 ou 11 caractérisés par le fait que les signaux sont à transparence variable.

REVENDICATION 13 Dispositifs selon la revendication 12 caractérisés par le fait que les signaux sont à coloration variable.

REVENDICATION 14 Dispositifs selon l'une quelconque des revendications 12 ou 13 caractérisés par le fait que les signaux sont tramés à densité variable.

REVENDICATION 15 Dispositifs selon l'une quelconque des revendications 10 à 14 caractérisés par le fait que les signaux d'au moins une série sont linéaires.

REVENDICATION 16 Dispositifs selon la revendication 15 caractérisés par le fait que les signaux sont portés sur le pourtour des espaces correspondant aux adresses.

REVENDICATION 17 Dispositifs selon l'une des revendications 15 ou 16 caractérisés par le fait que les signaux sont sécants auxdits espaces.

REVENDICATION 18 Application des dispositifs conformes à l'une quelconque des revendications 1 à 17 au diagnostic.

REVENDICATION 19 Dispositifs selon l'une quelconque des revendications 1 à 17 appliqués comme il est dit à la revendication 18 caractérisés par le fait que les données de l'un des ensembles indiquent les causes et celles d'un autre ensemble indiquent les effets.

REVENDICATION 20 Dispositifs selon la revendication 19 caractérisés par le fait que les signaux varient avec la probabilité des causes.

REVENDICATION 21

Dispositifs selon l'une des revendications 19 ou 20 caractérisés par le fait que les signaux varient avec les caractéristiques des effets et analogues.

REVENDICATION 22 Dispositif pour la mise en mémoire selon la revendication 1 caractérisé par le fait que sur des idéogrammes de base de configuration simple, des signes simples identiques entre eux sont placés selon le cas en un endroit déterminé du même idéogramme de base.

REVENDICATION 23 Dispositif selon la revendication 22 caractérisé par le fait que l'idéogramme de base est une barre verticale s'étendant sur toute la hauteur de l'espace disponible.

REVENDICATION 24 Dispositif selon les revendications 22 et 23 caractérisé par le fait que des signes distinctifs identiques sont placés à des hauteurs différentes de la barre verticale.

REVENDICATION 25 Dispositif selon la revendication 24 caractérisé par le fait que les signes distinctifs sont des traits horizontaux.

REVENDICATION 26 Dispositif selon les revendications 23 et 25 caractérisé par le fait que le trait supérieur est posé sur la barre verticale.

REVENDICATION 27 Dispositif selon les revendications 23 et 25 caractérisé par le fait que le trait inférieur se trouve à la base de la barre verticale.

REVENDICATION 28 Dispositif selon les revendications 22 à 24 caractérisé par le fait que les signes sont des ronds ou des points.

REVENDICATION 29 Dispositif selon la revendication 28 caractérisé par le fait que les ronds ou les points sont placés sur la barre.

REVENDICATION 30 Dispositif selon la revendication 29 caractérisé par le fait que les ronds ou les points sont tangents à la barre.

REVENDICATION 31 Dispositifs selon l'une quelconque des revendications 19 à 21 caractérisés par le fait qu'à l'adresse d'une cause sont prévus au moins deux espaces pour les signaux correspondant aux formes différentes ou successives des causes.

REVENDICATION 32 Dispositifs selon l'une quelconque des revendications précitées caractérisés par le fait que des signaux des couleurs différentes distinguent les données relatives à des données différentes appartenant aux différents ensembles.

REVENDICATION 33 Dispositifs selon l'une quelconque des revendications 18 à 33 caractérisés par le fait que sur une fiche de référence des effets, on enregistre les données correspondantes.

REVENDICATION 34 Dispositifs selon l'une quelconque des revendications 18 à 33 caractérisés par le fait que sur une fiche de référence des effets on enregistre les données correspondantes.

REVENDICATION 35 Dispositifs selon l'une quelconque des revendications 18 à 34 caractérisés
par le fait que l'ensemble des effets et l'ensemble des causes se recoupent
sur la matrice.

REVENDICATION 36 Dispositifs selon l'une quelconque des revendications 18 à 35 caractérisés
par le fait que la matrice d'adresses et la série de fiches correspondent
chacune à la fois à l'ensemble des causes et l'ensemble des effets.

REVENDICATION 37 Dispositifs selon la revendication 36 caractérisés par le fait que
l'adresse de chaque cause est associée à des adresses des effets correspondants.

REVENDICATION 38 Dispositifs selon l'une des revendications 36 ou 37 caractérisés par le
fait qu'une première sous-série de fiches correspond aux effets et portent
les signes relationnels aux adresses des causes correspondantes.

REVENDICATION 39 Dispositifs selon l'une quelconque des revendications 36 à 38 caractérisés
par le fait qu'une seconde sous-série de fiches correspond aux causes et portent les signes relationnels aux adresses des effets correspondants.

REVENDICATION 40 Dispositifs selon l'une quelconque des revendications 19 à 39 caractérisés
par le fait que les signaux portés à au moins une adresse de cause sont disposés selon des coordonnées à deux dimensions, l'une correspondant à la fréquence
statistique des effets, l'autre à l'ordre statistique de leur apparition.

REVENDICATION 41 Dispositifs selon l'une quelconque des revendications 18 à 40 caractérisés
par le fait qu'ils sont appliqués au diagnostic médical, les effets étant les
symptômes, signes cliniques et paracliniques, les causes étant les maladies.

REVENDICATION 42 Dispositifs selon la revendication 41 caractérisés par le fait que sont
inclus dans les symptômes les caractéristiques propres des sujets.

18

REVENDICATIONS

REVENDICATION 1

Dispositifs pour la mise en mémoire et le traitement de données appartenant à au moins deux ensembles de données de base et au moins un troisième ensemble de données relatives aux relations pouvant exister entre lesdites données de base constituées par au moins une série de fiches de mêmes caractéristiques dimensionnelles et de même matrice d'adresses qu'au moins une fiche de références, ladite matrice commune étant ordonnée, les données de base d'au moins un premier ensemble correspondant aux différentes adresses, les fiches d'au moins une série correspondant aux données de base d'au moins un second ensemble, chaque adresse de chaque fiche portant les signaux relationnels d'ordre plus que binaire entre les données de base des ensembles correspondant à ladite adresse et à ladite fiche, caractérisés par le fait que ces signaux sont variables en fonction des données relationnelles du troisième ensemble et en relation avec les données des deux premiers ensembles, les signaux appartenant à au moins deux séries, ceux d'au moins une série tout à variation continue, les signaux de chaque série variant avec les données des divers ensembles.

REVENDICATION 2 Dispositifs selon la revendication 1 caractérisés par le fait que les signaux d'au moins une série sont linéaires.

REVENDICATION 3 Dispositifs selon la revendication 2 caractérisés par le fait que les signaux sont portés sur le pourtour des espaces correspondant aux adresses.

REVENDICATION 4 Dispositifs selon l'une des revendications 2 ou 3 caractérisés par le fait que les signaux sont sécants auxdits espaces.

REVENDICATION 5 Application des dispositifs conformes à l'une des quelconque des revendications 1 à 4 au diagnostic.

REVENDICATION 6 Dispositifs selon l'une quelconque des revendications 1 à 4 appliqués comme il est dit à la revendication 5 caractérisés par le fait que les données de l'un des ensembles indiquent les causes et celles d'un autre ensemble indiquent les effets, les signaux variant avec la probabilité des causes et/ou les caractéristiques des effets.

REVENDICATION 7 Dispositif pour la mise en mémoire selon la revendication 1 caractérisé par le fait que sur des idéogrammes de base de configuration simple, des signes simples identiques entre eux sont placés selon le cas en un endroit déterminé du même idéogramme de base.

REVENDICATION 8 Dispositif selon la revendication 7 caractérisé par le fait que l'idéogramme de base est une barre verticale s'étendant sur toute la hauteur de l'espace disponible.

REVENDICATION 9 Dispositif selon les revendications 7 et 8 caractérisé par le fait que des signes distinctifs identiques sont placés à des hauteurs différentes de la barre verticale.

REVENDICATION 10 Dispositif selon la revendication 9 caractérisé par le fait que les signes distinctifs sont des traits horizontaux.

REVENDICATION 11

Dispositif selon les revendications 8 et 10 caractérisé par le fait que le trait supérieur est posé sur la barre verticale.

REVENDICATION 12 Dispositif selon les revendication 8 et 10 caractérisé par le fait que le trait inférieur se trouve à la base de la barre verticale.

REVENDICATION 13 Dispositif selon les revendications 7 à 9 caractérisé par le fait que les signes sont des ronds ou des points, placés sur la barre.

20

REVENDICATION 14

Dispositif selon la revendication 13 caractérisé par le fait que les ronds ou les points sont tangents à la barre.

REVENDICATION 15 Dispositifs selon l'une quelconque des revendications 6 à 14 caractérisés par le fait que les signaux portés à au moins une adresse de cause sont disposés selon des coordonnées à deux dimensions, l'une correspondant à la fréquence statistique des effets, l'autre à l'ordre statistique de leur apparition.

REVENDICATION 16 Dispositifs selon l'une quelconque des revendications 5 à 15 caractérisés par le fait qu'ils sont appliqués au diagnostic médical, les effets étant les symptômes, signes cliniques et paracliniques, les causes étant les maladies.

REVENDICATION 17 Dispositifs selon la revendication 16 caractérisés par le fait que sont inclus dans les symptômes les caractéristiques propres des sujets.

Fig.1

*Fig:2A*

## FICHE DE RÉFÉRENCE

| MALADIE XXX | MALADIE YYY | MALADIE ZZZ |
|---|---|---|

*Fig: 2B*

## SYMPTOME A

AX  AY  AZ

$A_1$  $A_1$  $A_1$  $A_1$

*Fig: 2C*

## SYMPTOME B

BX  BY  BZ

$B_2$  $B_2$

Fig. 2D

(REF + A + B)

Fig. 2E

SYMPTOME C

Fig. 2F

(REF + A + B + C)

4/7

**Fig.3A**

FICHE DE RÉFÉRENCE

VVVVVVVV WWWWWWW XXXXXX

YYYYYYYYY ZZZZZ _____

**Fig.3B**

SYMPTOME A

**Fig.3C**

SYMPTOME B

**Fig.4A**

FICHE DE RÉFÉRENCE
RRRRRRR [___] SSSSSSSSSS [___] TTTTTTTTTTT [___] UUUUUUU [___]
VVVVVVVVVVV [___|___|___] W W W W W W WWWW [___]
XXXXX [___] YYYYYYYYYYY [___|___] ZZZZZZZ [___]
_____

**Fig.4B**

AR    ar    AS  as    AT    at    AU
SYMPTOME A

AV    ax    AY    av    AW

*Fig.5A*

*Fig.5B*

SYMPTOME A

MALADIE B

*Fig.6*

SYMPTOME X

*Fig.7A*

*Fig.7B*

## Fig. 8A

MME DUPONT

## Fig. 8B

SYMPTOME 17

## Fig. 8C

MALADIE XXX

0020841

Fig.9

Office européen
des brevets

**RAPPORT DE RECHERCHE EUROPEENNE**

Numéro de la demande

EP 79 40 0586

## DOCUMENTS CONSIDERES COMME PERTINENTS

| Catégorie | Citation du document avec indication, en cas de besoin, des parties pertinentes | Revendication concernée |
|---|---|---|
| | DE - A - 2 436 846 (DITMORE)<br>* Figures 1-15; pages 3-5; pages 6-10; pages 14,15 * | 1-4,6 8,10, 12,18 21,33 34-42 |
| | -- | |
| | DE - A - 2 458 453 (BLANIE)<br>* Figures 1-12; pages 11-23; pages 32-34; pages 40-42,44 *<br>& FR - A - 2 254 061<br>& FR - A - 2 283 485<br>& FR - A - 2 273 316<br>& FR - A - 2 286 433 | 1-4,6 8-14, 18,19 21,22 28,31 42 |
| | -- | |
| A | US - A - 1 988 634 (STONECYPHER)<br>* Ensemble du document * | 1,6,20 |
| | -- | |
| A | FR - A - 1 328 110 (RADIO CORP.)<br>* Figures 1-5; pages 1-3 * | 1,5,9, 12,20 |
| | -- | |
| A | US - A - 3 957 586 (BABSON)<br>* Ensemble du document * | 1,34- 40 |
| | -- | |
| A | US - A - 3 186 111 (LAWLOR)<br>* Figures 1-8; colonne 1 * | 1,34- 41 |
| | ---- | |

CLASSEMENT DE LA DEMANDE (Int. Cl. 3)

G 06 K 21/04
         19/06//
A 61 B  5/00

DOMAINES TECHNIQUES RECHERCHES (Int. Cl. 3)

G 06 K 19/00
        19/04
        19/06
        21/00
        21/04
A 61 B  5/00
        19/00

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 08-02-1980 | PESCHEL |

OEB Form 1503.1  06.78